# EUROPÄISCHE PATENTSCHRIFT

(11) **EP 2 322 072 B1**
(45) Veröffentlichungstag und Bekanntmachung des Hinweises auf die Patenterteilung: **18.12.2013**
(21) Anmeldenummer: 11001364.6
(22) Anmeldetag: 18.02.2011
(51) Int. Cl.: A47L 15/42, A47L 15/48

(54) **Geschirrspüler mit Latentwärmespeicher**
Dishwasher with a latent heat reservoir
Lave-vaisselle doté d'un accumulateur thermique latent

(43) Veröffentlichungstag der Anmeldung: 18.05.2011
(73) Patentinhaber: V-Zug AG, 6301 Zug (CH)
(72) Erfinder: Loichinger, Albert Johann, 8135 Langnau am Albis (CH); Gau, Ingo, 6317 Oberwil (CH); Dober, Ernst, 6036 Dierikon (CH); Flück, Stefan, 6064 Kerns (CH)
(74) Vertreter: Sutter, Kurt

(56) Entgegenhaltungen:
- EP-A2- 2 193 741
- WO-A1-2005/053504
- DE-A1- 3 741 652
- DE-A1- 3 831 364
- DE-A1-102009 049 066
- DE-U1- 29 706 153
- Schaad, ST: "Peltier-Element kurz erklärt", Internet Article , 19. April 2009 (2009-04-19), XP002649001, Gefunden im Internet: URL:http://web.archive.org/web/20090419091 610/http://www.deltron.ch/pdf/produkte/pel tier/Peltier-Element_kurz_erklaert_d.pdf [gefunden am 2011-07-11]

## Beschreibung

### Gebiet der Erfindung

Die Erfindung betrifft einen Geschirrspüler mit Latentwärmespeicher sowie ein Verfahren zum Betrieb eines solchen Geräts.

### Hintergrund

Aus EP 2 193 741 ist ein Geschirrspüler mit einem Latentwärmespeicher und einer Wärmepumpe bekannt. Bei diesem Gerät wird in einer ersten Prozessphase die Prozessflüssigkeit im Bottich mit der Wärmepumpe aufgewärmt, wobei die Wärmepumpe gleichzeitig dem Latentwärmespeicher Wärme entzieht und diesen mindestens teilweise unter seine Phasenübergangstemperatur abkühlt. In einer späteren Prozessphase, namentlich beim Trocknen des Geschirrs, wird der Latentwärmespeicher thermisch an den Bottich angekoppelt, indem ein Wärmekopplungstank zwischen Latentwärmespeicher und Bottich mit Wasser gefüllt wird. Dadurch wird eine Wand des Bottichs gekühlt, wodurch Wasser aus der Prozessluft auskondensiert. Gleichzeitig geht Wärme wieder in den Latentwärmespeicher über.

DE 37 41 652 beschriebt eine Einrichtung zum Trocknen von Geschirr, bei welcher die Prozessluft durch einen Latentwärmespeicher gefördert wird. Dadurch wird sie zum Entzug von Wasser abgekühlt. Danach wird sie wieder erwärmt.

### Darstellung der Erfindung

Es stellt sich die Aufgabe, eine Alternative zur bekannten Lösung bereitzustellen.

Diese Aufgabe wird vom Geschirrspüler und Verfahren gemäss den unabhängigen Ansprüchen gelöst.

Demgemäss besitzt der Geschirrspüler
- Einen Bottich zur Aufnahme von Geschirr und Prozessflüssigkeit.
- Einen Latentwärmespeicher zur Speicherung von Wärme. Ein Latentwärmespeicher ist ein Wärmespeicher, der über einen Phasenübergang abgekühlt bzw. aufgeheizt werden kann, so dass ein Teil der Wärme bzw. Kälte als latente Wärme speicherbar ist.
- Eine Steuerung. Diese Steuerung ist mechanisch oder aufgrund ihrer Firmware so ausgestaltet, dass in einer ersten Prozessphase eines Waschgangs dem Latentwärmespeicher mit der Wärmepumpe Wärme entzogen und diese Wärme der Prozessflüssigkeit zugeführt wird. In einer zweiten, späteren Prozessphase, insbesondere des gleichen Waschgangs, wird zum Trocknen des Geschirrs dem Bottich Wärme entzogen und dem Latentwärmespeicher zugeführt, wodurch es zu einer Auskondensation von Wasser aus der Prozessluft kommt und der Latentwärmespeicher gleichzeitig wieder erwärmt wird.
- Eine Pumpe, um in der zweiten Prozessphase ein Fluid zwischen einem ersten Bereich am oder im Bottich und einem zweiten Bereich am oder im Latentwärmespeicher zu zirkulieren.

Erfindungsgemäss wird also in einer ersten Prozessphase dem Latentwärmespeicher mit der Wärmepumpe Wärme entzogen und der Prozessflüssigkeit zugeführt. Auf diese Weise kann die Prozessflüssigkeit z.B. zu Beginn der Hauptspülphase und/oder der Klarspülphase aufgeheizt werden. In einer zweiten, späteren Prozessphase, in der das Geschirr getrocknet werden soll, wird dem Bottich Wärme entzogen und dem Latentwärmespeicher zugeführt, wodurch die Prozessluft getrocknet werden kann. Hierzu wird in der zweiten Prozessphase ein Fluid zwischen einem ersten Bereich am oder im Bottich und einem zweiten Bereich am oder im Latentwärmespeicher umgepumpt, d.h. durch Pumpen zirkuliert.

Beim genannten Fluid handelt es sich um ein Fluid, das nicht der Prozessluft entspricht, sondern z.B. um eine Flüssigkeit oder ein anderes Gas. (Unter Flüssigkeiten werden dabei auch Suspensionen mit in der Flüssigkeit angeordneten Festkörperanteilen verstanden, wie z.B. eine teilweise ausgefrorene Flüssigkeit.) In diesem Falle muss das Fluid in einem von der Prozessluft abgetrennten Fluidkreislauf geführt werden. Dieser Fluidkreislauf umfasst einen ersten Wärmetauscher, der thermisch mit dem Innenraum des Bottichs gekoppelt ist und um einen zweiten Wärmetauscher, der thermisch mit dem Latentwärmespeicher gekoppelt ist. Durch Umpumpen des Fluids durch die beiden Wärmetauscher kann die Wärme vom Bottich zum Latentwärmespeicher gefördert werden. Dabei wird im Bereich des ersten Wärmetauschers Feuchtigkeit aus der Prozessluft auskondensiert.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung einer ersten Ausführung eines Geschirrspülers,
Fig. 2 eine schematische Darstellung einer zweiten Ausführung eines Geschirrspülers (nicht beansprucht) und
Fig. 3 eine schematische Darstellung einer dritten Ausführung eines Geschirrspülers (nicht beansprucht).

### Wege zur Ausführung der Erfindung

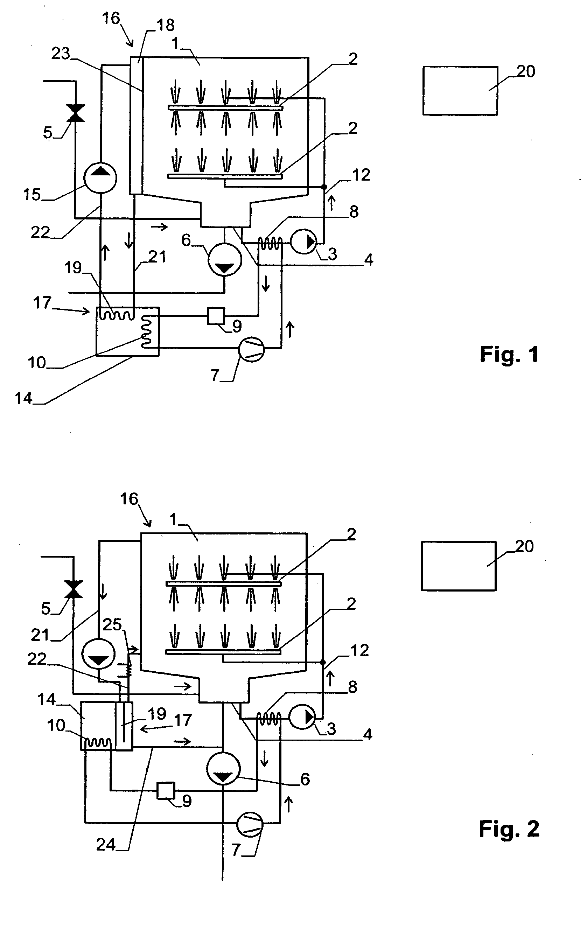

Der Geschirrspüler nach Fig. 1 besitzt als Prozessraum einen Bottich 1 zur Aufnahme des Spülguts, wie z.B. Geschirr und Besteck, und der Prozessflüssigkeit. Im Bottich 1 sind hierzu z.B. in bekannter Weise Geschirrkörbe vorgesehen (nicht gezeigt). Das Spülgut wird mit Prozessflüssigkeit, d.h. Wasser mit allfälligen Zusätzen, aus Sprühvorrichtungen, wie z.B. drehbaren Sprüharmen 2 und/oder anderen Düsenanordnungen, beaufschlagt. Hierzu ist am Bottich 1 ein Prozesswasserkreislauf mit einer Zirkulationspumpe 3 vorgesehen, mit welcher die Prozessflüssigkeit aus einem Sumpf 4 des Bottichs 1 durch eine Leitung 12 zu den Sprühvorrichtungen 2 gefördert werden kann. Am Prozesswasserkreislauf kann eine konventionelle Heizung vorgesehen sein (nicht gezeigt), um das Prozesswasser zu erwärmen.

Weiter verfügt das Gerät über ein Frischwasserventil 5, durch welches frisches Prozesswasser, gegebenenfalls über eine Aufbereitungsanlage, wie z.B. eine Entsalzungsanlage (nicht gezeigt), dem Bottich 1 zugeführt werden kann.

Zum Abführen von Prozessflüssigkeit aus dem Bottich 1 dient eine Ablaufpumpe 6.

Das Gerät besitzt eine Wärmepumpe mit einen Kompressor 7, einem Kondensator 8, einem Expansionsventil 9 und einem Verdampfer 10.

Der Kondensator 8 ist thermisch mit dem Bottich 1 oder dem Prozesswasserkreislauf verbunden. Im vorliegenden Beispiel ist er an der Leitung 12 und/oder der Förderpumpe 3 angeordnet. Alternativ oder zusätzlich hierzu kann der Kondensator 8 thermisch mit dem Bottich 1 gekoppelt sein.

Der Verdampfer 10 ist thermisch mit einem Latentwärmespeicher 14 gekoppelt.

Der Latentwärmespeicher 14 ist vorzugsweise als Tank ausgebildet, in welchem eine Wärmespeicherflüssigkeit angeordnet ist. Dabei kann es sich z.B. um Wasser handeln, oder die Wärmespeicherflüssigkeit kann zumindest teilweise aus Wasser bestehen. Wasser ist bevorzugt aufgrund seiner hohen Wärmekapazität und toxischen Unbedenklichkeit. Der Tank für die Wärmespeicherflüssigkeit ist vorzugsweise als geschlossener Tank ausgestaltet. Als geschlossener Tank ist ein Tank zu verstehen, der nicht mit den Leitungen (wie z.B. Zuflussleitung, Abflussleitung oder Zirkulationsleitung) für die Prozessflüssigkeit kommuniziert, so dass die Prozessflüssigkeit getrennt von der Wärmespeicherflüssigkeit bleibt. Der geschlossene Tank kann jedoch z.B. Öffnungen aufweisen, die z.B. Zwecks Wartung und Transport Zugriff auf die Wärmespeicherflüssigkeit zulassen. Die genannten Öffnungen können verschliessbar ausgestaltet sein, oder permanent offen bleiben, z.B. zum Druckausgleich.

Denkbar ist es weiter, dass der Tank mit einer Frischwasserzufuhr und einem Abfluss versehen ist, um das Wasser im Tank regelmässig, z.B. nach jeweils 50 Waschzyklen oder längerer Standzeit, automatisch zu wechseln, so dass hohe Hygiene eingehalten und einem Wasserverlust (aufgrund z.B. von Diffusion durch Schläuche etc.) entgegengewirkt werden kann. Analog zum geschlossenen Tank weist aber der Geschirrspüler auch in diesem Falle vorzugsweise keine Mittel auf, um Wasser vom Bottich in den Tank zu führen.

Der Latentwärmespeicher 14 ist vorzugsweise in einem Bodenbereich des Geräts angeordnet. Es sind Wärmekopplungsmittel vorgesehen, mit denen der Latentwärmespeicher bedarfsweise thermisch an den Bottich gekoppelt werden kann. Diese Wärmekopplungsmittel umfassen eine Pumpe 15, um ein Fluid zwischen einem ersten Bereich 16 am oder im Bottich 1 und einem zweiten Bereich 17 am oder im Latentwärmespeicher 14 zirkulieren zu lassen. In der Ausführung nach Fig. 1 ist hierzu im ersten Bereich 16 ein erster Wärmetauscher 18 vorgesehen, und im zweiten Bereich 17 ein zweiter Wärmetauscher 19. Der Fluidkreislauf umfasst weiter eine erste Leitung 21, in welcher das Fluid mit der Pumpe 15 vom ersten zum zweiten Wärmetauscher 18 bzw. 19 geführt wird, sowie eine zweite Leitung 22, in welcher das Fluid mit der Pumpe 15 gleichzeitig vom zweiten zum ersten Wärmetauscher 19 bzw. 18 geführt wird.

Der Latentwärmespeicher 14 ist ausserhalb des Bottichs 1 und beabstandet zu diesem angeordnet, so dass der Bottich 1 und der Latentwärmespeicher 14 bei ausgeschalteter Pumpe 15 und somit ruhendem Fluid thermisch voneinander getrennt sind.

Vorzugsweise enthält das Fluid im Fluidkreislauf zu einem wesentlichen Teil Wasser, da dieses toxisch unbedenklich, wenig korrosiv und preiswert ist. Vorteilhaft ist das Fluid aber so zusammengesetzt, dass es einen tieferen Gefrierpunkt hat als die Phasenumwandlungstemperatur des Latentwärmespeicher 14, so dass es noch problemlos umgepumpt werden kann, wenn sich der Latentwärmespeicher teilweise oder vollständig in seinem tieferen Phasenzustand befindet.

Anstelle einer Flüssigkeit kann als Fluid auch ein Gas verwendet werden.

In der Ausführung nach Fig. 1 ist der erste Wärmetauscher 18 als Tank oder Leitungssystem ausgestaltet, welcher bzw. welches an einer Wand 23 des Bottichs 1 angeordnet ist, so dass beim Trocknen des Spülguts (siehe unten) die Feuchtigkeit aus der Prozessluft an der Wand auskondensieren und nach unten fliessen kann und gleichzeitig eine Konventionsströmung im Bottich 1 entsteht. Vorzugsweise handelt es sich dabei um die Rückwand des Bottichs, d.h. um die der Benutzertüre gegenüber liegende Wand. In der Ausführung nach Fig. 1 befindet sich der erste Wärmetauscher 18 ausserhalb des Bottichs, d.h. er ist aussen an der Wand 23 angeordnet, so dass die Wand gegen Innen möglichst einfach strukturiert bleiben kann.

Alternativ ist es allerdings auch denkbar, den ersten Wärmetauscher 18 im Innern des Bottichs anzuordnen, wo er noch besseren Kontakt zur Prozessluft hat.

Die in Fig. 1 dargestellten Komponenten des Geräts werden von einer Steuerung 20 gesteuert.

Im Folgenden wird ein Programmablauf unter Verwendung des Latentwärmespeichers 14 beschrieben. (Zu beachten ist dabei, dass in der Steuerung 20 auch noch andere Programmabläufe abgespeichert sein können, in denen der Latentwärmespeicher 14 in anderer Weise oder gar nicht eingesetzt wird.)

In einer ersten Prozessphase, welche im Folgenden Hauptwaschgang genannt wird und der eine optionale Vorspülphase vorausgehen kann, wird die Wärmepumpe 7, 8, 9, 10 in Betrieb genommen, um dem Latentwärmespeicher 14 Wärme zu entziehen und diese dem Prozesswasser im Bottich zuzuführen. Während dieser Phase ist die Pumpe 15 ausgeschaltet, so dass keine oder höchstens eine sehr geringe thermische Kopplung zwischen Wärmespeicher 14 und Bottich 1 besteht. Mit der Wärmepumpe 7, 8, 9, 10 wird die Temperatur im Wärmespeicher 14 vorzugsweise auf oder bis unter die Phasenübergangstemperatur abgesenkt. Falls nötig, kann in dieser Phase zusätzlich eine elektrische Heizung eingesetzt werden, um dem Prozesswasser bzw. dem Bottich 1 noch mehr Energie zuzuführen. Das Prozesswasser wird in der Hauptspülphase z.B. maximal auf 40 °C (je nach Prozesstyp jedoch auch bis zu 70°C) erwärmt.

An die Hauptspülphase schliesst optional eine Zwischenspülphase an, in welcher das Wasser im Bottich ersetzt wird durch Frischwasser, mit welchem das Geschirr gespült wird. Auch während dieser Zeit bleibt die Pumpe 15 ausgeschaltet.

Hierauf folgt als weitere Prozessphase die Klarspülphase, in welcher dem Bottich 1 wiederum Frischwasser zugeführt wird. Das Wasser wird mit Klarspüler versetzt und auf relativ hohe Temperatur von z.B. 60 °C erwärmt. Hierzu kann wiederum die Wärmepumpe und/oder die nicht gezeigte elektrische Heizung eingesetzt werden. Während der Zwischenspül- und Klarspülphase bleibt der Pumpe 15 weiterhin ausgeschaltet.

Danach folgt als letzte Prozessphase die Trocknungsphase, welche anspruchsgemäss als "zweite Prozessphase" bezeichnet wird. Während dieser Phase wird das Wasser aus dem Bottich abgepumpt. Die Pumpe 15 wird eingeschaltet, so dass Fluid zwischen dem ersten und dem zweiten Wärmetauscher 18 bzw. 19 zirkuliert. Dadurch kühlt sich die Wand 23 ab, und gleichzeitig wird dem Latentwärmespeicher 14 Wärme zugeführt. Dadurch bildet die entsprechende Wand 23 eine Kühlfläche, an der sich Wasser aus der feuchten Prozessluft im Bottich 1 abscheiden kann. Das abgeschiedene Wasser läuft durch den Sumpf 4 ab.

Nach dem Trocknen ist der Reinigungsvorgang abgeschlossen. Der Latentwärmespeicher 14 kann sich nun wieder auf Zimmertemperatur erwärmen, soweit er diese noch nicht erreicht hat. Sodann kann er von der Wärmepumpe für den nächsten Reinigungsprozess wieder verwendet werden.

Denkbar ist es, als Wärmekopplungsfluid für den Wärmekopplungstank 16 Wasser aus dem Salzlaugenbehälter einer Entkalkungsanlage des Geräts zu verwenden. Dies hat den Vorteil, dass dieses Wasser einen sehr tiefen Gefrierpunkt hat, so dass der Wärmespeicher 14 auf relativ tiefe Temperaturen gebracht werden kann, ohne dass das Wärmekopplungsfluid gefriert.

Die in Fig. 2 gezeigte zweite Ausführung (nicht beansprucht) des Geschirrspülers ist im Wesentlichen gleich aufgebaut wie jene gemäss Fig. 1. Im Folgenden wird deshalb lediglich auf die Unterschiede eingegangen.

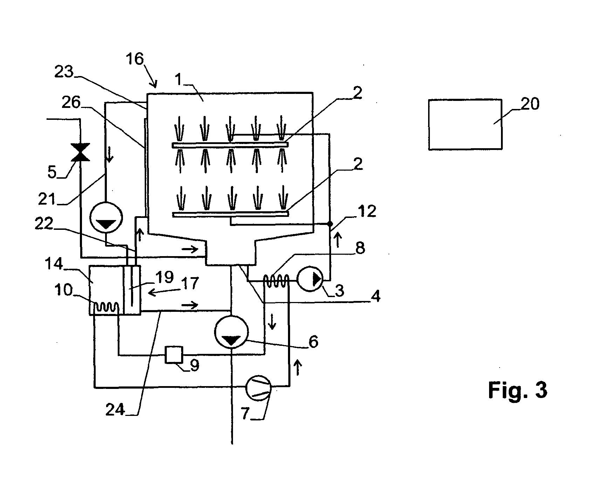

Die Ausführung nach Fig. 2 unterscheidet sich von der ersten Ausführung dadurch, dass als Fluid von der Pumpe 15 Prozessluft aus dem Bottich 1 gefördert wird. Diese Prozessluft kann mit der Pumpe (in Form eines Ventilators) 15 über die erste Leitung 21 aus dem Bottich 1 angesogen werden und gelangt in den zweiten Wärmetauscher 19, von dort zur Pumpe (Ventilator) 15 und über die zweite Leitung 22 zurück in den Bottich. Vorzugsweise wird die Luft wieder aufgewärmt, nachdem sie den Wärmetauscher 19 passiert hat und bevor sie zurück in den Bottich 1 tritt, uns zwar insbesondere wie folgt:
- Die Aufwärmung kann mit einer Heizung 25 erfolgen. Dabei kann es sich z.B. um eine elektrische Heizung handeln, oder die Luft kann über den Motor der Sprühpumpe oder des Kompressors des Geräts geführt werden und dessen Abwärme nutzen.
- Die Luft kann auch, wie in Fig. 3 angedeutet, über eine Seitenwand 23 des Bottichs 1 oder das Türinnenblech geführt und auf diese Weise aufgewärmt werden, wodurch gleichzeitig eine Wandfläche des Bottichs 1 abgekühlt wird, um so die Kondensation im Bottich zu fördern. Dies ist in Fig. 3 illustriert (nicht beansprucht), wo an der Seitenwand 23 die Leitung 21 mäanderförmig verläuft und so einen Wärmetauscher 26 bildet

Generell sollten also zwischen dem zweiten Bereich 17 und dem Bottich Aufheizmittel 25 bzw. 26 angeordnet sein, um vom zweiten Bereich 17 zum Bottich strömende Luft aufzuwärmen.

Wiederum wird die Pumpe 15 in der oben beschriebenen zweiten Prozessphase, d.h. beim Trocknen des Spülguts, betrieben, während sie ansonsten vorzugsweise ruht. Im Bereich des zweiten Wärmetauschers 19 kommt die Prozessluft in der zweiten Prozessphase somit mit kalten Flächen in Kontakt, so dass es zu einer Auskondensation von Wasser kommt. Dieses Wasser fliesst vom zweiten Wärmetauscher 19 über eine Kondensatleitung 24 zum Sumpf ab.

Zu beachten ist, dass die Steuerung 20 die oben erwähnten verschiedenen Prozessschritte automatisch durchführt. Die Erfindung kann somit einerseits als Vorrichtung, deren Steuerung zur Durchführung einer oder mehrerer der oben beschriebenen Schritte ausgestaltet ist, formuliert werden, andererseits aber auch als Verfahren, welches einen oder mehrere der verschiedenen Schritte aufweist.

Zusammenfassend kann gesagt werden, dass ein Geschirrspüler zum Heizen mit einer Wärmepumpe ausgestattet wird. Die Wärmepumpe kühlt einen Latentwärmespeicher ab und gefriert diesen zumindest teilweise. Während der Trocknung des Geschirrs wird ein Fluid mit einer Pumpe durch einen ersten Wärmetauscher und einen zweiten Wärmetauscher zirkuliert. Der erste Wärmetauscher befindet sich in thermischem Kontakt mit dem Bottich und der zweite Wärmetauscher mit dem Latentwärmespeicher. Auf diese Weise kann dem Latentwärmespeicher während der Trocknung wieder Wärme zugeführt werden, und gleichzeitig fördert die vom ersten Wärmetauscher gekühlte Bottichfläche die Kondensation von Feuchte aus der Prozessluft.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Geschirrspüler mit
einem Bottich (1) zur Aufnahme von Spülgut und Prozessflüssigkeit,
einem Latentwärmespeicher (14) zur Speicherung von Wärme,
einer Wärmepumpe (7 - 10), mit welcher dem Latentwärmespeicher (14) Wärme entziehbar und der Prozessflüssigkeit zuführbar ist, und
einer Steuerung (20), welche dazu ausgestaltet ist, in einer ersten Prozessphase dem Latentwärmespeicher (14) mit der Wärmepumpe (7 - 10) Wärme zu entziehen und der Prozessflüssigkeit zuzuführen und in einer zweiten, späteren Prozessphase zum Trocknen des Geschirrs dem Bottich (1) Wärme zu entziehen und dem Latentwärmespeicher (14) zuzuführen,
**dadurch gekennzeichnet, dass** der Geschirrspüler eine Pumpe (15) aufweist, um in der zweiten Prozessphase ein Fluid zwischen einem ersten Bereich (16) am oder im Bottich (1) und einem zweiten Bereich (17) am oder im Latentwärmespeicher (14) zu zirkulieren,
wobei das Fluid in einem von der Prozessluft abgetrennten Fluidkreislauf geführt ist, wobei der Fluidkreislauf aufweist:
einen ersten Wärmetauscher (18), der thermisch mit einem Innenraum des Bottichs (1) gekoppelt ist, und
einen zweiten Wärmetauscher (19), der thermisch mit dem Latentwärmespeicher (14) gekoppelt ist.

2. Geschirrspüler nach Anspruch 1, wobei das Fluid eine Flüssigkeit ist.

3. Geschirrspüler nach Anspruch 2, wobei das Fluid Wasser aufweist.

4. Geschirrspüler nach einem der Ansprüche 2 oder 3, wobei ein Gefrierpunkt des Fluids tiefer als eine Phasenumwandlungstemperatur des Latentwärmespeichers (14) ist.

5. Geschirrspüler nach einem der vorangehenden Ansprüche, wobei der Fluidkreislauf aufweist:
eine erste Leitung zum Leiten des Fluids vom ersten zum zweiten Wärmetauscher (18, 19) sowie
eine zweite Leitung zum Leiten des Fluids vom zweiten zum ersten Wärmetauscher (19, 18).

6. Geschirrspüler nach einem der vorangehenden Ansprüche, wobei der erste Wärmetauscher (18) an einer Wand (23) des Bottichs (1), insbesondere aussen an der Wand (23) des Bottichs (1), angeordnet ist.

7. Geschirrspüler nach Anspruch 6, wobei der erste Wärmetauscher (18) an einer Rückwand gegenüber einer Benutzertüre des Bottichs (1) angeordnet ist.

8. Geschirrspüler nach einem der Ansprüche 1 bis 5, wobei der erste Wärmetauscher (18) im Innern des Bottichs (1) angeordnet ist

9. Geschirrspüler nach einem der vorangehenden Ansprüche, wobei die Steuerung (20) dazu ausgestaltet ist, den Latentwärmespeicher (14) in der ersten Prozessphase mindestens teilweise unter eine Phasenübergangstemperatur des Latentwärmespeichers (14) abzukühlen.

10. Geschirrspüler nach einem der vorangehenden Ansprüche, wobei der Latentwärmespeicher (14) eine Wärmespeicherflüssigkeit, insbesondere Wasser aufweist.

11. Geschirrspüler nach Anspruch 10, wobei der Latentwärmespeicher (14) einen geschlossenen Tank aufweist, in welchem die Wärmespeicherflüssigkeit angeordnet ist.

12. Geschirrspüler nach einem der Ansprüche 10 oder 11, wobei der Latentwärmespeicher (14) einen Tank aufweist, aber wobei der Geschirrspüler keine Mittel aufweist, um Wasser vom Bottich (1) in den Tank zu führen.

13. Verfahren zum Steuern eines Geschirrspülers, wobei der Geschirrspüler einen Bottich (1) zur Aufnahme von Geschirr und Prozessflüssigkeit, einen Latentwärmespeicher (14) und eine Wärmepumpe (7 - 10) aufweist, und wobei
in einer ersten Prozessphase dem Latentwärmespeicher (14) mit der Wärmepumpe (7 - 10) Wärme entzogen und der Prozessflüssigkeit zugeführt wird und
in einer zweiten, späteren Prozessphase zum Trocknen des Geschirrs dem Bottich (1) Wärme entzogen und dem Latentwärmespeicher (14) zugeführt wird,
**dadurch gekennzeichnet, dass** in der zweiten Prozessphase mit einer Pumpe (15) ein Fluid zwischen einem ersten Bereich (16) am oder im Bottich (1) und einem zweiten Bereich (17) am oder im Latentwärmespeicher (14) umgepumpt wird,
wobei das Fluid in einem von der Prozessluft abgetrennten Fluidkreislauf geführt wird, wobei der Fluidkreislauf aufweist:
einen ersten Wärmetauscher (18), der thermisch mit einem Innenraum des Bottichs (1) gekoppelt ist, und
einen zweiten Wärmetauscher (19), der thermisch mit dem Latentwärmespeicher (14) gekoppelt ist.

## Claims

1. Dishwasher with
a vat (1) for receiving wash ware and process liquid,
a latent heat storage (14) for storing heat,
a heat pump (7 - 10), by means of which heat is extractable from the latent heat storage (14) and fed into the process liquid, and
a controller (20) adapted to extract heat from the latent heat storage (14) by means of the heat pump ( 7- 10) in a first process phase and to feed it into the process liquid and to extract heat from the vat (1) and to feed it into the latent heat storage (14) in a second, later process phase for drying the dish,
**characterized in that** the dish washer has a pump (15) for circulating a fluid between a first area (16) at or in the vat (1) and a second area (17) at or in the latent heat storage (14) in the second process phase,
wherein the fluid is guided into a fluid circuit which is separated from the process air, wherein the fluid circuit has:
a first heat exchanger (18) which is thermally coupled with an interior space of the vat (1), and
a second heat exchanger (19) which is thermally coupled with the latent heat storage (14).

2. Dishwasher according to claim 1, wherein the fluid is a liquid.

3. Dishwasher according to claim 2, wherein the fluid has water.

4. Dishwasher according to one of the claims 2 or 3, wherein a freezing point of the fluid is lower than a phase transition temperature of the latent heat storage (14).

5. Dishwasher according to one of the preceding claims, wherein the fluid circuit has:
a first duct for guiding the fluid from the first to the second heat exchanger (18, 19) as well as
a second duct for guiding the fluid from the second to the first heat exchanger (19, 18).

6. Dishwasher according to one of the preceding claims, wherein the first heat exchanger (18) is arranged at a wall (23) of the vat (1), particularly outside the wall (23).

7. Dishwasher according to claim 6, wherein the first heat exchanger (18) is arranged at a back wall opposite of the user door of the vat (1).

8. Dishwasher according to one of the claims 1 to 5, wherein the first heat exchanger (18) is arranged inside the vat (1).

9. Dishwasher according to one of the preceding claims, wherein the controller (20) is adapted to cool the latent heat storage (14) in the first process phase at least partially below a phase transition temperature of the latent heat exchanger (14).

10. Dishwasher according to one of the preceding claims, wherein the latent heat storage (14) has a heat storage liquid, particularly water.

11. Dishwasher according to claim 10, wherein the latent heat storage (14) has a closed tank inside which the heat storage liquid is arranged.

12. Dishwasher according to one of the claims 10 or 11, wherein the latent heat exchanger (14) has a tank, however wherein the dish washer has no means for guiding water from the vat (1) into the tank.

13. Method for controlling a dish washer, wherein the dish washer has a vat (1) for receiving wash ware and process liquid, a latent heat storage (14) and a heat pump (7 - 10), and wherein
in a first process phase heat is extracted from the latent heat storage (14) by means of the heat pump ( 7- 10) and fed into the process liquid and
in a second, later process phase for drying the dish heat is extracted from the vat (1) and fed into the latent heat storage (14),
**characterized in that** in the second process phase a fluid is pumped between a first area (16) at or in the vat (1) and a second area (17) at or in the latent heat storage (14) by means of a pump (15),
wherein the fluid is guided into a fluid circuit which is separated from the process air, wherein the fluid circuit has:
a first heat exchanger (18) which is thermally coupled to an interior space of the vat (1), and
a second heat exchanger (19) which is thermally coupled to latent heat storage (14).

## Revendications

1. Lave-vaisselle
avec un récipient (1) pour recevoir de la vaisselle et du liquide de processus,
un accumulateur de chaleur latente (14) pour accumuler de la chaleur,
une pompe à chaleur (7 - 10) à l'aide de laquelle de la chaleur est extraite de l'accumulateur de chaleur latente (14) et alimentée dans le liquide de processus, et
une commande (20) adaptée à extraire de la chaleur de l'accumulateur de chaleur latente (14) à l'aide de la pompe à chaleur (7 - 10) et à l'alimenter dans le liquide de processus dans une première phase de processus et à extraire de la chaleur du récipient (1) et à l'alimenter dans l'accumulateur de chaleur latente (14) dans une deuxième, ultérieure phase de processus pour sécher la vaisselle,
**caractérisé en ce que** le lave-vaisselle a une pompe (15) pour circuler un fluide entre une première zone (16) à côté du ou dans le récipient (1) et une deuxième zone (17) à côté de ou dans l'accumulateur de chaleur latente (14) dans la deuxième phase de processus,
le fluide étant circulé dans un circuit de liquide séparé de l'air de processus, le circuit de fluide ayant:
un premier échangeur de chaleur (18) couplé thermiquement avec un espace intérieur du récipient (1) et
un deuxième échangeur de chaleur (19) couplé thermiquement avec l'accumulateur de chaleur latente (14).

2. Lave-vaisselle selon la revendication 1, le fluide étant un liquide.

3. Lave-vaisselle selon la revendication 2, le fluide ayant de l'eau.

4. Lave-vaisselle selon l'une des revendications 2 ou 3, un point de congélation du fluide étant inférieur à une température de transformation de phase de l'accumulateur de chaleur latente (14).

5. Lave-vaisselle selon l'une des revendications précédentes, le circuit de fluide ayant:
une première conduite pour guider le fluide du premier échangeur de chaleur (18, 19) au deuxième et
une deuxième conduite pour guider le fluide du deuxième échangeur de chaleur (18, 19) au premier.

6. Lave-vaisselle selon l'une des revendications précédentes, le premier échangeur de chaleur (18) étant arrangé à côté d'une paroi (23) du récipient (1), particulièrement du côté extérieur de la paroi (23).

7. Lave-vaisselle selon la revendication 6, le premier échangeur de chaleur (18) étant arrangé à côté d'une paroi arrière en face d'une porte d'utilisation du récipient (1).

8. Lave-vaisselle selon l'une des revendications 1 à 5, le premier échangeur de chaleur (18) étant arrangé à l'intérieur du récipient (1).

9. Lave-vaisselle selon l'une des revendications précédentes, la commande (20) étant adaptée à refroidir l'accumulateur de chaleur latente (14) au moins partiellement au dessous d'une température de transformation de phase de l'accumulateur de chaleur latente (14) dans la première phase de processus.

10. Lave-vaisselle selon l'une des revendications précédentes, l'échangeur de chaleur latente (14) ayant un liquide d'accumulation de chaleur, particulièrement de l'eau.

11. Lave-vaisselle selon la revendication 10, l'accumulateur de chaleur latente (14) ayant un réservoir fermé dans lequel le liquide d'accumulation de chaleur est arrangé.

12. Lave-vaisselle selon l'une des revendications 10 ou 11, l'accumulateur de chaleur latente (14) ayant un réservoir, mais le lave-vaisselle n'ayant pas des moyens pour guider de l'eau du récipient (1) dans le réservoir.

13. Procédé pour commander un lave-vaisselle, le lave-vaisselle ayant un récipient (1) pour recevoir de la vaisselle et du liquide de processus, un accumulateur de chaleur latente (14) et une pompe à chaleur (7 - 10), et
de la chaleur étant extraite de l'accumulateur de chaleur latente (14) à l'aide de la pompe à chaleur (7 - 10) et alimentée dans le liquide de processus dans une première phase de processus et
de la chaleur étant extraite du récipient (1) et alimentée dans l'accumulateur de chaleur latente (14) dans une deuxième, ultérieure phase de processus pour sécher la vaisselle,
**caractérisé en ce qu'**un fluide est circulé entre une première zone (16) à côté du ou dans le récipient (1) et une deuxième zone (17) à côté de ou dans l'accumulateur de chaleur latente (14) à l'aide d'une pompe (15) dans la deuxième phase de processus,
le fluide étant circulé dans un circuit de liquide séparé de l'air de processus, le circuit de fluide ayant:
un premier échangeur de chaleur (18) couplé thermiquement avec un espace intérieur du récipient (1) et
un deuxième échangeur de chaleur (19) couplé thermiquement avec l'accumulateur de chaleur latente (14).
